# EUROPEAN PATENT SPECIFICATION

(11) **EP 2 246 275 B1**
(45) Date of publication and mention of the grant of the patent: **12.06.2013**
(21) Application number: 10161518.5
(22) Date of filing: 29.04.2010
(51) Int. Cl.: B65G 17/12

(54) **Transmission and guide assembly for product carrier plates**
Getriebe- und Führungsanordnung für Produkttrageplatten
Transmission et guide pour plateaux porteurs

(30) Priority: 30.04.2009 IT TO20090344
(43) Date of publication of application: 03.11.2010
(73) Proprietor: CARLE & MONTANARI - OPM S.p.A., Rozzano (MI) (IT)
(72) Inventor: Martini, Fabio, 12062, CHERASCO (IT); Tomadon, Massimo, 12040, SOMMARIVA PERNO (IT)
(74) Representative: Bergadano, Mirko

(56) References cited:
- DE-A1- 2 542 906
- IT-B- 1 238 183
- US-A- 2 965 214
- US-A- 3 902 590

## Description

The present invention refers to a transmission and guide assembly for accompanying product carrier plates along a curve of a transfer path, in particular for accompanying chocolate moulds according to claim 1.

Chocolate moulding systems include transfer systems with two parallel conveyor chains, which are wound on transmission cogwheels so as to define a path comprising a series of horizontal branches that are located one over the other and are connected by curves. This system is used, for example, to continuously move the moulds in areas where the chocolate is cooled.

The sides of the chocolate moulds (or the holders where these moulds are housed) are hinged about respective horizontal axes to the two transport chains and run on fixed rails when travelling along the horizontal branches of the path. When travelling along the curves to change direction and move to another horizontal branch of the path, the moulds are accompanied so that they remain horizontal and always have the same face turned upwards.

For example, a known accompanying system is described in the Italian patent IT1238183. DE 2542906 discloses an assembly according to the preamble of claim 1.

There is a need for an alternative solution, that guides the moulds with precision along the curves of the transfer path, that is compact and robust, and that requires little maintenance.

The purpose of the present invention is to create a transmission and guide assembly for accompanying product carrier plates along a curve of a transfer path, in particular for accompanying chocolate moulds, which fulfills the above requirement in a simple and economic manner.

According to the present invention there is provided a transmission and guide assembly for accompanying product carrier plates along a curve of a transfer path, in particular for accompanying chocolate moulds, as defined in claim 1.

The invention will now be described with reference to the attached drawings, which illustrate a nonlimiting embodiment, in which:
- Figure 1 is a perspective view of a preferred embodiment of the transmission and guide assembly for accompanying product carrier plates along a curve of a transfer path, in particular for accompanying chocolate moulds, according to the present invention;
- Figures 2 to 5 are side views, and with parts removed for the sake of clarity, of the transmission and guide assembly in Figure 1 which, in sequence, accompanies a product carrier plate; and
- Figure 6 is a perspective and partial view of an alternative embodiment of the transmission and guide assembly in Figure 1.

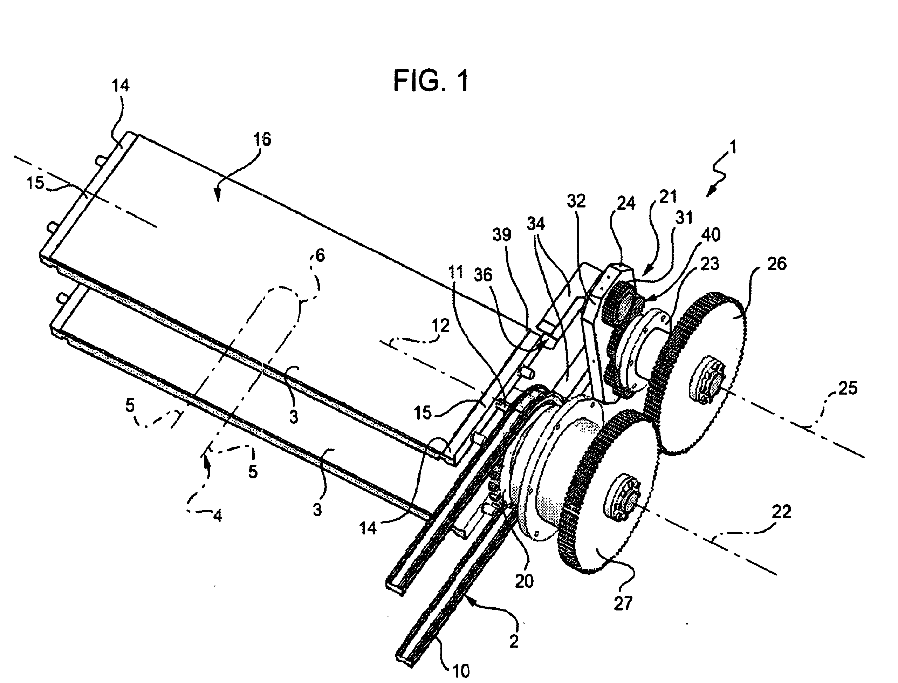

In Figure 1, the number 1 indicates the transmission and guide assembly which forms part of a conveyor 2, which transfers a series of product carrier plates 3 continuously along a path 4, comprising a series of horizontal branches 5 connected by curves 6. The product carrier plates 3 are defined, in particular, by moulds provided with upper chambers (not shown) into which the melted food product, for example chocolate, is poured.

The conveyor 2 comprises two conveyor chains or belts 10 that are parallel to the path 4 and wound on transmission cogwheels 20 that define the curves 6. Figure 1 shows only one of the two conveyor chains or belts 10 and only one of the transmission cogwheels 20.

The conveyor chains or belts 10 comprise a plurality of hinging means 11, for example, a plurality of horizontal pins which are spaced apart along the path 4 and define the respective hinge axes 12. The side edges of the product carrier plates 3 are indicated by reference number 14 and comprise respective central portions 15 that are hinged to the devices 11.

In this way, the product carrier plates 3 oscillate about the axis 12 with respect to the conveyor chains or belts 10, but are kept horizontal so that the same side 16 is always facing upwards: along the branches 5, the side edges 14 slide against horizontal guides (not shown); along each curve 6, the assembly 1 comprises a guide device 21 associated with one of the two transmission cogwheels 20 of such curve.

Such transmission cogwheel 20 rotates about an axis 22 that is fixed with respect to a support structure 23 (partially shown). The guide device 21 is arranged outside the curve 6 (that is, past the convex part of the curve 6) and comprises a support element defined, in particular, by a rocker arm 24, which has a central portion hinged to the support structure 23, so that it rotates about an axis 25. The axis 25 is parallel to and spaced apart from the axis 22 and is set at the same height as the axis 25.

The rocker arm 24 is operated to rotate with the same angular velocity, in absolute value, as the transmission cogwheel 20, but in the opposite direction. In particular, a pair of gears 26, 27 are included to transmit and synchronize the rotational motion from the transmission cogwheel 20 to the rocker arm 24. The gears 26, 27 mesh with each other and are fixed and coaxial with respect to the rocker arm 24 and, respectively, to the pulley 20.

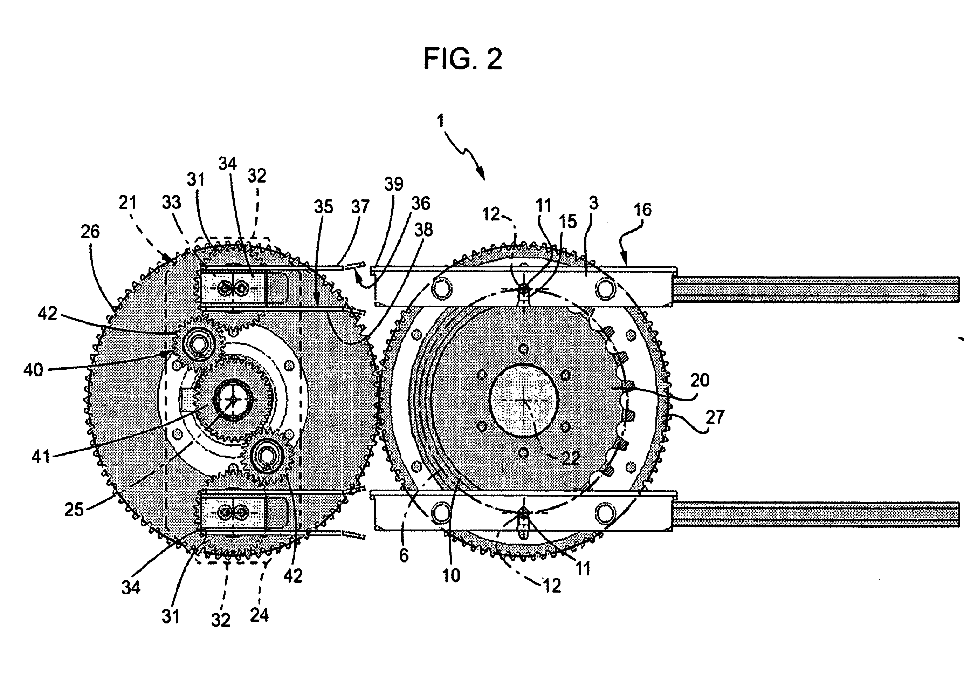

With reference to Figures 2 to 5, the assembly 1 comprises two planetary or satellite wheels 31, which are hinged to diametrically opposite portions 32 of the rocker arm 24, so that they rotate about respective axes 33, parallel and eccentric with respect to the axis 25. The wheels 31 carry, in fixed positions, respective retention members defined by forks 34, configured in order to couple with the side edges 14 along at least part of the curve 6. In particular, the forks 34 define respective horizontal seats 35, which are pass-through parallel to the branches 5 and have their respective entrances 36 facing the path 4.

Each fork 34 comprises an upper strip 37 and a lower strip 38, the ends of which, at the entrance 36, diverge (i.e. one is upwardly inclined and the other is downwardly inclined) so as to define a lead-in for a front edge 39 of the product carrier plates 3.

The assembly 1 comprises a rotation device 40 to turn the wheels 31 with respect to the rocker arm 24, at the same angular velocity, in absolute value, and in the opposite direction. The preferred embodiment illustrated here is provided with a planetary gear reducer, so that the wheels 31 are defined by gears and the device 40 comprises a fixed solar gear 41, which is coaxial to the rocker arm 24, has the same diameter as the wheels 31 and is coupled to the wheels 31 by interposing idler gears 42 hinged to the rocker arm 24.

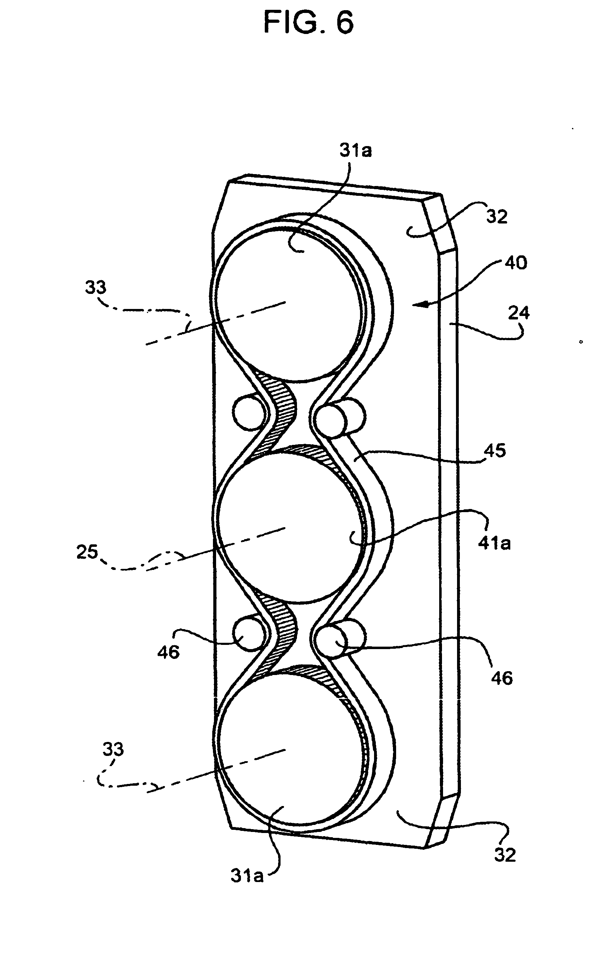

In the alternative embodiment in Figure 6, the device 40 comprises a toothed transmission belt 45 wound on the external teeth of a fixed solar gear 41a, that replaces the solar gear 41, and on the external teeth of two satellite wheels 31a, that replace the wheels 31. The device 40 also comprises a plurality of tighteners 46 that are arranged at intervals between the wheels 41a and 31a and act on the back of the belt 45 to increase the winding angle of the belt 45 over the wheel 41a.

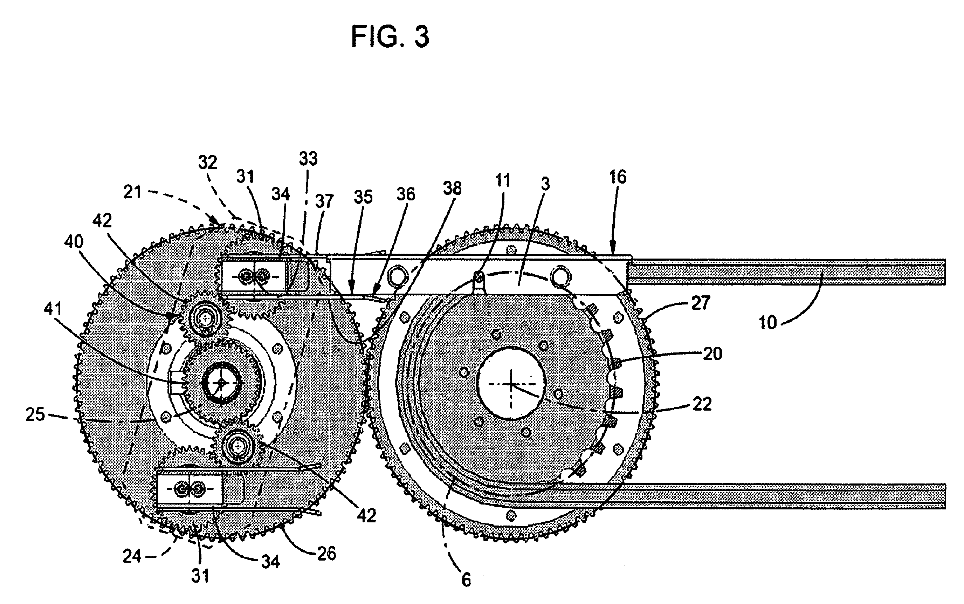

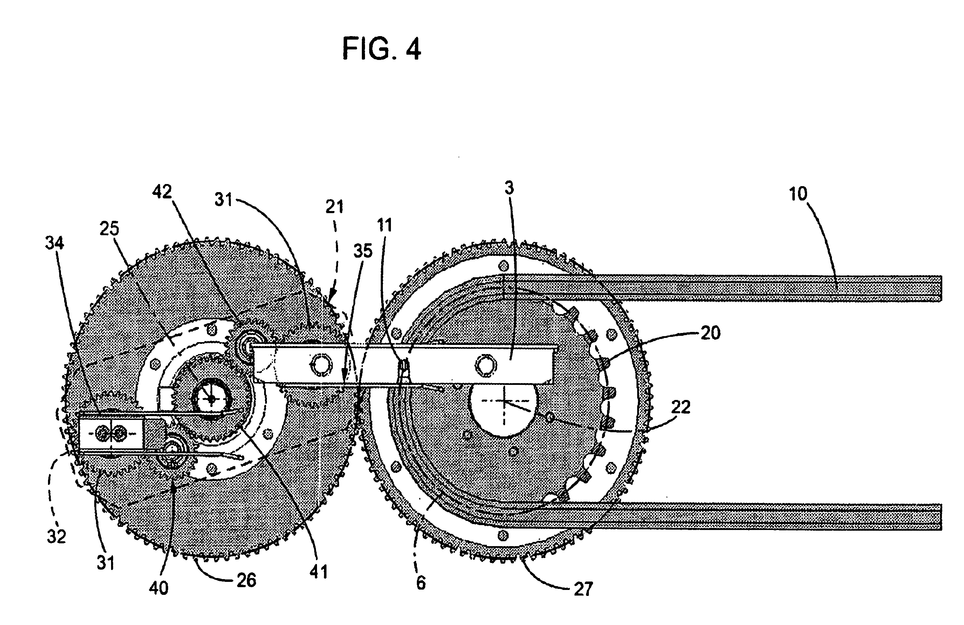

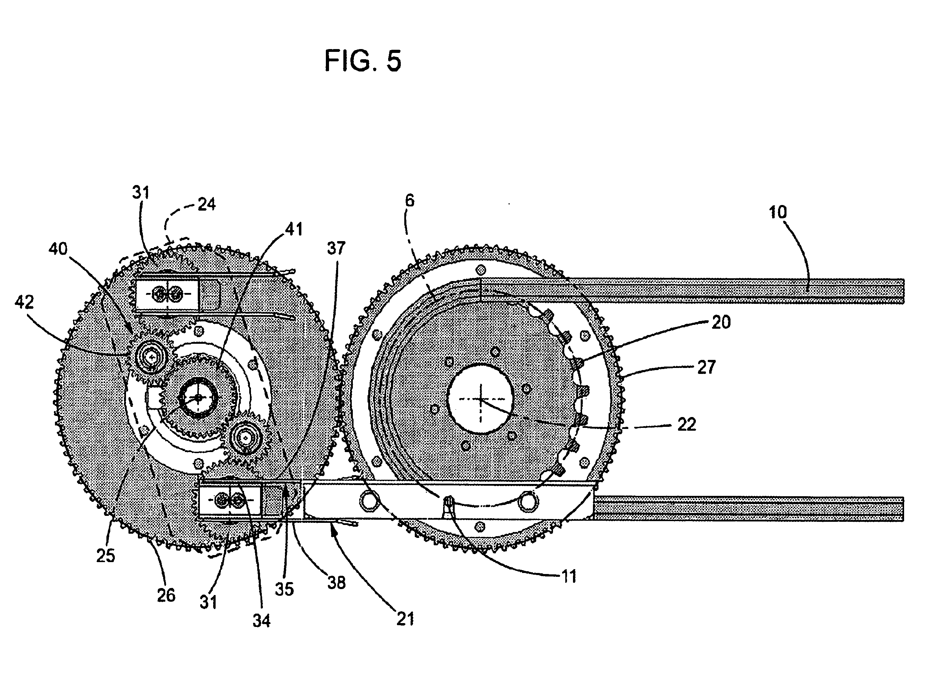

As shown in Figures 2 to 5, the forks 34 take the product carrier plate 3 from the upper branch 5 (Figures 2 and 3): one of the two side edges 14 automatically slides into the entrance 36, since the rotation of the rocker arm 24 is synchronized with that of the transmission cogwheel 20. After which, the side edge 14 slides into the seat 35 without difficulty, since the seat 35 remains horizontal (Figures 4 and 5) during the synchronized rotation. The strips 37, 38 remain in contact with the product carrier plate 3, above and below the side edge 14, and accompany it to the lower branch 5, thereby maintaining the face 16 horizontal. The dimensions of the assembly 1 are designed so as to avoid interference between the product carrier plate 3, which is accompanied by one of the two forks 34, and the other fork 34 that remains momentarily empty.

Thanks to the use of a satellite system, the assembly 1 achieves a high level of precision when positioning the forks 34 so that the carrier plates are accompanied with a high degree of precision and reliability. Furthermore, the use of a planetary gear reducer and of the gears 26,27 to transmit motion from the transmission cogwheel to the support element defined by the rocker arm 24 make it possible to limit maintenance of the assembly 1 and to maintain said assembly 1 compact.

Lastly, from the foregoing it is clear that modifications and variations may be made to the assembly 1 without departing from the scope of protection of the invention, as defined in the attached claims.

The transmission cogwheel 20 may be a driven wheel or a driving wheel of the conveyor 2; and/or the conveyor 2 and/or its product carrier plates 3 could be configured to carry solid or liquid foods other than chocolate (e.g. the product carrier plates could be defined by cheese moulds), or to transport non-food products (wax products, glass, etc ...).

Moreover, the planetary gearing could have a solar gear defined by a wheel with internal cogs, instead of the wheel 41 with outer cogs; and/or the rocker arm 24 could be replaced by a differently-shaped support element, and/or operated by systems other than the gears 26, 27.

The shape of the forks 34 could differ from that shown, and/or they could be replaced by different retention members, configured to perform the same function. Moreover, such retention members could be coupled to the satellite wheels to cushion any oscillations and facilitate the coupling of the product carrier plates 3.

Lastly, a different number of satellite wheels and retention members could be provided in device 21, based on the distance between the product carrier plates 3 mounted on the devices 11 along the conveyor chains or belts 10.

## Claims

1. Transmission and guide assembly (1) for accompanying product carrier plates (3) along a curve (6) of a transfer path (4), in particular for accompanying chocolate moulds; the assembly comprising:
- a support structure (23);
- a transmission cogwheel (20) turning with respect to said support structure (23) about a first rotation axis (22), to deviate, along said curve (6), the motion of a transport belt or chain (10) that, in use, is wound on the transmission cogwheel (20) and hingedly carries the side edges (14) of the product carrier plates (3); and
- a guide device (21) for keeping said product carrier plates (3) horizontal while they travel along said curve (6), the guide device comprising:
a) a support element (24), which can rotate with respect to said fixed support structure about a second rotation axis (25) parallel to and spaced apart from said first rotation axis (22), and operated so as to turn with the same angular velocity, in absolute value, as said transmission cogwheel (20), and
b) at least one retention member (34) carried by said support element (24) and configured so as to engage said product carrier plates (3) along at least part of said curve (6),
**characterized in that** said guide device (21) also comprises:
- at least one satellite wheel (31) having its axis (33) parallel and eccentric with respect to said second rotation axis (25) and hinged to said support element (24) so as to turn about its own axis (33), and
- rotation means (40) to make said satellite wheel (31) rotate with respect to said support element (24) in the opposite direction and with the same angular velocity, in absolute value;
said retention member (34) being carried by said satellite wheel (31) to rotate together with said satellite wheel (31).

2. Assembly according to claim 1, **characterized in that** said rotation means (40) comprise:
- a fixed wheel (41;41a) coaxial with said support element (24), and
- coupling means (42;45) between said fixed wheel (41;41a) and said satellite wheel (31;31a).

3. Assembly according to claim 2, **characterized in that** said satellite wheel (31) and said fixed wheel (41) are defined by respective gears, and **in that** said coupling means comprise an idler gear (42) hinged to said support element (24) and meshing with said satellite wheel (31) and said fixed wheel (41).

4. Assembly according to claim 2, **characterized in that** said coupling means comprise a toothed belt (45) wound on outer toothing of said fixed wheel (41a) and said satellite wheel (31a).

5. Assembly according to any of the previous claims, **characterized in that** said support element (24) rotates in the opposite direction to said transmission cogwheel (24), and **in that** said guide device (21) is placed external to said curve (6).

6. Assembly according to claim 5, **characterized by** comprising two gears (26,27) integral and coaxial with said support element (24) and, respectively, with said transmission cogwheel (20) and meshing with each other to transmit the rotational motion from said transmission cogwheel (20) to said second rotation axis (25).

7. Assembly according to any of the previous claims, **characterized in that** said retention member (34) comprises an upper portion (37) and a lower portion (38) defining between them a seat (35), which is pass-through in the horizontal direction and has an entrance (36) facing said curve (6).

8. Assembly according to claim 7, **characterized in that** said upper and lower portions (37,38) comprise respective entrance tips that are respectively upwardly inclined and downwardly inclined so as to define a lead-in for an edge (39) of the product carrier plates (3).

9. Conveyor comprising:
- two transport belts or chains (10), which are parallel to each other, defining a transfer path (4) comprising a plurality of horizontal branches (5) joined together by curves (6), and comprising hinging means (11) spaced apart from each other along said transfer path (4),
- a plurality of pairs of transmission cogwheels rotating with respect to support structures (23) about respective first axes of rotation (22), to deviate the motion of said transport belts or chains (10) along said curves (6),
- a plurality of product carrier plates (3) comprising side portions (14) hinged to said hinging means (11) so as to swing about horizontal and mutually parallel hinge axes (12), and
- for at least part of said curves (6), a transmission and guide assembly (1) made according to any of the previous claims.

10. Conveyor according to claim 9, **characterized in that** said product carrier plates (3) are defined by respective moulds equipped with moulding seats able to receive poured, melted foodstuffs.

## Patentansprüche

1. Getriebe und Führungsanordnung (1) zum Begleiten von Produkttragplatten (3) längs einer Kurve (6) eines Übertragungspfads (4), insbesondere zur Begleitung von Schokoladenformen, wobei die Anordnung folgendes aufweist:
- eine Tragstruktur (23);
- ein Getriebezahnrad (20), welches sich bezüglich der Tragstruktur (23) um Abzuweichen, entlang der erwähnten Kurve (6), die Bewegung eines Transportbandes oder einer Kette (10) das bzw. das im Gebrauch um das Getriebezahnrad (20) gewunden ist und die Seitenkanten (14) der Produkttragplatten (3) angelenkt trägt; und
- eine Führungsvorrichtung (21) um die Produkttragplatten (3) horizontal zu halten, während sie entlang der Kurve (6) laufen, wobei die Führungsvorrichtung folgendes aufweist:
a) ein Tragelement (24), welches sich bezüglich der erwähnten festen Tragstruktur um eine zweite Drehachse (25) parallel zu und beabstandet von der ersten Drehachse (22) drehen oder rotieren kann und derart betrieben wird, dass es sich mit der gleichen Winkelgeschwindigkeit in einem absoluten Wert dreht wie das Übertragungszahnrad (20), und
b) mindestens ein Rückhalteglied (34) getragen von dem erwähnten Tragelement (24) und ausgebildet zum Eingriff mit den Produkttragplatten (3) entlang mindestens eines Teils der Kurve (6); **dadurch gekennzeichnet, dass** die Führungsvorrichtung (21) auch folgendes aufweist:
- mindestens ein Satellitenrad (31) mit seiner Achse parallel und exzentrisch bezüglich der zweiten Drehachse (25) verlaufend und angelenkt an das erwähnte Tragelement (24), um sich so um seine eigene Achse (33) zu drehen, und
- Drehmittel (40), um das erwähnte Satellitenrad (31) in Drehung zu versetzen, und zwar bezüglich des Tragelements (24) in entgegengesetzter Richtung und mit der gleichen Winkelgeschwindigkeit, in einem absoluten Wert;
wobei das Halteglied (34) durch das erwähnte Satellitenrad (31) getragen wird, um zusammen mit dem Satellitenrad (31) zu rotieren oder sich zu drehen.

2. Anordnung nach Anspruch 1, **dadurch gekennzeichnet, dass** die erwähnten Dreh- oder Rotationsmittel (40) folgendes aufweisen:
ein feststehendes Rad (41, 41 a) koaxial mit dem Tragelement (24), und
Kupplungsmittel (42, 45) zwischen dem erwähnten feststehenden Rad (41, 41 a) und dem erwähnten Satellitenrad (31, 31 a).

3. Anordnung nach Anspruch 2, **dadurch gekennzeichnet, dass** das Satellitenrad (31) und das feststehende Rad (41) durch entsprechende Zahnräder definiert sind, und dass die Kupplungsmittel ein Zwischenzahnrad (42) aufweisen, angelenkt an das erwähnte Tragelement (24) und in Eingriff stehend mit dem Satellitenrad (31) und dem erwähnten feststehenden Rad (41).

4. Anordnung nach Anspruch 2, **dadurch gekennzeichnet, dass** die Kupplungsmittel ein Zähne aufweisendes Band (45) umfassen, und zwar gewickelt um die Außenverzahnung des erwähnten feststehenden Rades (41 a) und das Satellitenrad (31 a).

5. Anordnung nach einem der vorhergehenden Ansprüche, **dadurch gekennzeichnet, dass** das Tragelement (24) sich in eine entgegengesetzte Richtung bezüglich des Getriebezahnrads (24) dreht und dass die Führungsvorrichtung (21) außerhalb der erwähnten Kurve (6) angeordnet ist.

6. Anordnung nach Anspruch 5, **dadurch gekennzeichnet, dass** zwei Zahnräder (26, 27) vorgesehen sind, und zwar integral und koaxial mit dem Tragelement (24) und, respektiv, mit dem Getriebezahnrad (20) und in Eingriff stehen miteinander, um die Drehbewegung von dem Getriebezahnrad (20) zu der zweiten Drehachse (25) zu übertragen.

7. Anordnung nach einem der vorhergehenden Ansprüche, **dadurch gekennzeichnet, dass** das erwähnte Halteglied (34) einen oberen Teil (37) und einen unteren Teil (38) aufweist, und dazwischen einen Sitz (35) definierend, der ein Durchgang in Horizontalrichtung ist und einen zur erwähnten Kurve (6) hinweisenden Eingang (36) aufweist.

8. Anordnung nach Anspruch 7, **dadurch gekennzeichnet, dass** die oberen und unteren Teile (37, 38) entsprechende Eingangsspitzen aufweisen, die nach oben bzw. unten derart geneigt sind, um eine Einführung für eine Kante (39) der Produkttragplatten (3) zu definieren.

9. Eine Transportvorrichtung, die folgendes aufweist:
- zwei Transportbänder oder -ketten (10), die parallel zueinander verlaufen und einen Übertragungspfad (4) definieren, der eine Vielzahl von horizontalen Zweigen (5) aufweist, die durch Kurven (6) miteinander verbunden sind, und wobei ferner Angelmittel (11) vorgesehen sind, und zwar beabstandet voneinander entlang des Übertragungspfades (4),
- eine Vielzahl von Paaren von Getriebezahnrädern, die bezüglich der Tragstrukturen (23) um entsprechende erste Drehachsen (22) rotieren, um die Bewegung der erwähnten Transportbänder oder -ketten (10) entlang der erwähnten Kurven (6) abzulenken,
- eine Vielzahl von Produkttragplatten (3), die Seitenteile (14) aufweisen, und zwar angelenkt an die erwähnten Anlenkmittel (11), um so um horizontale und gegenseitige parallele Anlenkachsen (12) zu schwingen, und
- für mindestens einen Teil der Kurven (6) eine Getriebe- und Führungsanordnung (1) nach einem der vorhergehenden Ansprüche.

10. Transportvorrichtung nach Anspruch 9, **dadurch gekennzeichnet, dass** die erwähnten Produkttragplatten (3) durch entsprechende Formen definiert sind, und zwar ausgestattet mit Formsitzen, die in der Lage sind gegossene, geschmolzene Nahrungsmittel aufzunehmen.

## Revendications

1. Ensemble de transmission et de guidage (1) pour accompagner des plaques de support de produits (3) le long d'une courbe (6) d'un chemin de transfert (4), en particulier pour accompagner des moules à chocolat ; l'ensemble comprenant :
- une structure de support (23) ;
- une roue dentée de transmission (20) tournant par rapport à ladite structure de support (23) autour d'un premier axe de rotation (22), pour dévier, le long de ladite courbe (6), le mouvement d'une courroie ou d'une chaine de transport (10) qui, à l'utilisation, est enroulée sur la roue dentée de transmission (20) et porte de manière articulée les bords latéraux (14) des plaques de support de produits (3) ; et
- un dispositif de guidage (21) pour maintenir horizontales lesdites plaques de support de produits (3) pendant qu'elles cheminent le long de ladite courbe (6), le dispositif de guidage comprenant :
a) un élément de support (24), pouvant tourner par rapport à ladite structure de support fixe autour d'un deuxième axe de rotation (25) parallèle audit, et espacé dudit, premier axe de rotation (22) et utilisé de façon à tourner avec la même vitesse angulaire, en valeur absolue, que ladite roue dentée de transmission (20) ; et
b) au moins un élément de retenue (34) porté par ledit élément de support (24) et configuré de façon à engager lesdites plaques de support de produits (3) le long d'au moins une partie de ladite courbe (6), **caractérisé en ce que** ledit dispositif de guidage (21) comprend également :
- au moins une roue satellite (31) ayant son axe (33) parallèle et excentrique par rapport audit deuxième axe de rotation (25) et articulée audit élément de support (24) de façon à tourner autour de son propre axe (33) ; et
- des moyens de rotation (40) pour faire que ladite roue satellite (31) tourne par rapport audit élément de support (24) dans la direction opposée et avec la même vitesse angulaire, en valeur absolue, ledit élément de retenue (34) étant porté par ladite roue satellite (31) de façon à tourner ensemble avec ladite roue satellite (31).

2. Ensemble selon la revendication 1, **caractérisé en ce que** lesdits moyens de rotation (40) comprennent :
- une roue fixe (41 ; 41a) coaxiale avec ledit élément de support (24) ; et
- des moyens d'accouplement (42 ; 45) entre ladite roue fixe (41 ; 41a) et ladite roue satellite (31 ; 31a).

3. Ensemble selon la revendication 2, **caractérisé en ce que** ladite roue satellite (31) et ladite roue fixe (41) sont définies par des engrenages respectifs et **en ce que** lesdits moyens d'accouplement comprennent un pignon (42) articulé audit élément de support (24) et en prise avec ladite roue satellite (31) et ladite roue fixe (41).

4. Ensemble selon la revendication 2, **caractérisé en ce que** lesdits moyens d'accouplement comprennent une courroie dentée (45) enroulée sur les dentures extérieures de ladite roue fixe (41a) et de ladite roue satellite (31a).

5. Ensemble selon l'une quelconque des revendications précédentes, **caractérisé en ce que** ledit élément de support (24) tourne dans la direction opposée à celle de ladite roue dentée de transmission (20) et **en ce que** ledit dispositif de guidage (21) est placé de façon externe à ladite courbe (6).

6. Ensemble selon la revendication 5, **caractérisé en ce qu'**il comprend deux engrenages (26, 27) faisant parties intégrantes dudit, et coaxiaux avec ledit élément de support (24) et, respectivement, avec ladite roue dentée de transmission (20) et en prise l'un avec l'autre pour transmettre le mouvement de rotation de ladite roue dentée de transmission (20) audit deuxième axe de rotation (25).

7. Ensemble selon l'une quelconque des revendications précédentes, **caractérisé en ce que** ledit élément de retenue (34) comprend une partie supérieure (37) et une partie inférieure (38) définissant entre elles un siège (35), qui est un passage traversant dans la direction horizontale et comporte une entrée (36) faisant face à ladite courbe (6).

8. Ensemble selon la revendication 7, **caractérisé en ce que** lesdites parties supérieure et inférieure (37, 38) comprennent des pointes d'entrée respectives qui sont respectivement inclinée vers le haut et inclinée vers le bas de façon à définir un point d'insertion pour un bord (39) des plaques de support de produits (3).

9. Convoyeur comprenant :
- deux courroies ou chaines de transport (10), qui sont parallèles l'une à l'autre, définissant un chemin de transfert (4) comprenant une pluralité d'embranchements (5) horizontaux joints ensemble par des courbes (6) et comprenant des moyens d'articulation (11) espacés les uns des autres le long dudit chemin de transfert (4) ;
- une pluralité de paires de roues dentées de transmission en rotation par rapport à des structures de support (23) autour de premiers axes respectifs de rotation (22), pour dévier le mouvement desdites courroies ou chaines de transport (10) le long desdites courbes (6) ;
- une pluralité de plaques de support de produits (3) comprenant des parties latérales (14) articulées auxdits moyens d'articulation (11) de façon à se balancer autour d'axes d'articulation (12) horizontaux et mutuellement parallèles ; et
- pour au moins une partie desdites courbes (6), un ensemble de transmission et de guidage (1) selon l'une quelconque des revendications précédentes.

10. Convoyeur selon la revendication 9, **caractérisé en ce que** lesdites plaques de support de produits (3) sont définies par des moules respectifs équipés de sièges de moulage capable de recevoir des produits alimentaires fondus, versés.
